(19) Europäisches Patentamt
European Patent Office
Office européen des brevets

(11) **EP 1 734 344 B1**

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(51) Int Cl.:
*G01D 5/244* (2006.01)    *G01B 7/30* (2006.01)

(21) Anmeldenummer: **06010239.9**

(22) Anmeldetag: **18.05.2006**

(54) **Drehwinkelsensor für eine elektrische Lenkung eines Flurförderzeugs**

Rotating angle sensor for a steering input device of an electric power steering of an industrial truck

Capteur d'angle de rotation pour une direction assistée électrique d'un chariot de manutention

(84) Benannte Vertragsstaaten:
**DE FR GB**

(30) Priorität: **17.06.2005 DE 102005028043**

(43) Veröffentlichungstag der Anmeldung:
**20.12.2006 Patentblatt 2006/51**

(73) Patentinhaber: **Jungheinrich Aktiengesellschaft
22047 Hamburg (DE)**

(72) Erfinder:
• **Hämmerl, Robert, Dipl.-Ing.
84098 Hohenthann (DE)**
• **Mänken, Frank, Dr.-Ing.
24558 Henstedt-Ulzburg (DE)**
• **Weber, Christoph, Dr.-Ing.
24558 Henstedt-Ulzburg (DE)**

(74) Vertreter: **Hauck Patent- und Rechtsanwälte
Postfach 11 31 53
20431 Hamburg (DE)**

(56) Entgegenhaltungen:
| | |
|---|---|
| EP-A2- 1 241 438 | WO-A-20/05050140 |
| DE-A1- 10 143 286 | DE-A1- 19 548 385 |
| DE-A1-9102004 002 62 | JP-A- 1 262 415 |
| US-A- 5 463 393 | |

## Beschreibung

Die Erfindung bezieht sich auf einen Drehwinkelsensor für eine elektrische Lenkung eines Flurförderzeugs.

Es ist bekannt, Flurförderzeuge und andere Fahrzeuge mit einer elektrischen Lenkung zu versehen. Die Drehung eines Lenkgebers wird mit Hilfe eines Drehwinkelsensors gemessen und das Drehwinkelsignal auf einen Aktuator gegeben, der in Abhängigkeit von dem gemessenen Drehwinkel einen Lenkwinkel für ein zu lenkendes Rad erzeugt. Für derartige elektrische Lenkungen, jedoch auch anderen Anwendungen ist die Sicherheit in der Winkelerfassung von Bedeutung. Ein Ausfall der elektrischen Lenkung oder eine falsche Winkelanzeige können unangenehme Folgen haben, wenn sie nicht rechtzeitig festgestellt werden.

Es ist bekannt, einen Drehwinkel mit Hilfe eines elektrischen Potentiometers zu bestimmen. Es ist ferner bekannt, einen Drehwinkel dadurch zu bestimmen, daß zwei magnetfeldempfindliche orthogonal angeordnete Sensorelemente, z. B. Hallsensoren, mit einem Permanentmagneten zusammenwirken, der auf z. B. der Welle eines Lenkgebers angeordnet ist. Die Sensorelemente erzeugen sinusförmige Ausgangssignale in Abhängigkeit von der Drehbewegung des Magneten $[X = A \cdot \cos(\theta) + B$ und $Y = A \cdot \sin(\theta) + B]$. Mit Hilfe einer in einer Auswerteeinheit abgelegten Formel, z. B. $\theta = \alpha \tan 2(Y - B, X - B)$ wird der Drehwinkel in einem Prozessor errechnet und weiter verarbeitet. Mit einen derartigen Drehwinkelsensor läßt sich der Drehwinkel relativ genau bestimmen. Nachteilig ist, daß Fehler, die durch einen Ausfall eines Sensorelements, z. B. durch einen Drahtbruch oder durch Auftauchen unzulässiger Driftphänomene, wie z. B. statische externe Magnetfelder verursacht werden, unter Umständen nicht gleich erkannt werden.

JP-A-01 262 415, DE 101 43 286 A1, US-A-5 463 393 und WO 2005/050140 A offenbaren Drehwinkelsensoren, welche auf Fehlfunktionen überwacht werden mittels Quadraturformeln wie definiert in Anspruch 3.

Der Erfindung liegt die Aufgabe zugrunde, einen Drehwinkelsensor zu schaffen für elektrische Lenkungen für Flurförderzeugen, der auf Fehlfunktionen überwacht wird.

Diese Aufgabe wird durch die Merkmale des Patentanspruchs 1 bzw. Patentanspruchs 2 gelöst.

Bei der Erfindung werden zu Ausgangssignalen eines Sensors die zugehörigen idealen Ausgangssignale des zweiten Sensors bestimmt, und zwar aus den geometrischen Beziehungen der Sensoren zueinander. Die idealen Werte werden abgespeichert und den jeweils gemessenen gegenübergestellt. Stimmen sie überein, liegt kein Meßfehler vor. Ist dies nicht der Fall, liegt u.U. ein Meßfehler vor, der ein Eingreifen in den Betrieb des Fahrzeugs nötig macht.

Bei der Lösung nach Patentanspruch 2, die eine mögliche Ausgestaltung der Erfindung betrifft, werden redundante Drehwinkel aus den Sensorsignalen $X, Y$ ermittelt nach den nachstehenden Formeln:

$$\theta_{\text{redundant, 1}} = \arcsin\left(\frac{Y - B}{A}\right)$$

$$\theta_{\text{redundant, 2}} = \arccos\left(\frac{X - B}{A}\right)$$

In diesen Formeln ist $A$ die Amplitude und $B$ der Offset für die Ausgangssignale $Y$ und $X$. Ein Offset $B$ wird eingeführt um stets positive Werte zu erhalten. Die redundanten Drehwinkel werden zueinander in Beziehung gesetzt. Falls der Absolutwert der Differenz der redundanten Drehwinkel einen vorgegebenen Wert überschreitet, wird ein entsprechendes Signal erzeugt, z. B. ein Warn- oder Stoppsignal für das Fahrzeug. Denn die ermittelte Abweichung deutet darauf hin, daß mindestens ein Sensorelement unzuverlässig arbeitet bzw. einer unzulässigen Drift unterworfen ist.

Bei der alternativen Ausgestaltung nach Patentanspruch 3 wird aus der Formel

$$\left| (X - B)^2 + (Y - B)^2 - A^2 \right|$$

das Resultat $\varepsilon$ ermittelt, wobei $X$ und $Y$, wie schon angegeben, die Ausgangssignale, d. h. die Spannung am Ausgang der Sensorelemente darstellen, $A$ die Amplitude der Ausgangssignale und $B$ der bereits erwähnte Offset. Überschreitet das Resultat $\varepsilon$ einen vorgegebenen Wert, wird wiederum ein Warn- oder Stoppsignal erzeugt.

Mit der Erfindung ist Sicherheit gewährleistet bei Ausfall bzw. einer Störung eines oder beider Sensorelemente, so daß rechtzeitig für Abhilfe gesorgt bzw. ein Stopp des Fahrzeugs bewirkt werden kann, falls notwendig. Vorteilhaft bei der Erfindung ist, daß auf einfache mathematische Weise, d. h. mit Hilfe eines ohnehin vorhandenen Prozessors möglich ist, redundante Ergebnisse zu gewinnen, die eine Überprüfung der durch eine andere Funktion ermittelten Winkelwerte ermöglichen. Ein apparativer Mehraufwand für diese Sicherheitsüberprüfung bei der Drehwinkelermittlung ist nicht erforderlich.

Nach einer Ausgestaltung der Erfindung ist es vorteilhaft, die Berechnung der redundanten Winkelwerte in vorgegebenen zeitlichen Abständen (Abtastrate T) durchzuführen, um z. B. eine Drift der Ausgangssignale zu ermitteln. Wenn zwischen zwei Abtastzeitpunkten die Drehwinkelwerte einen vorgegebenen Änderungswert überschreiten, kann z. B. wiederum ein Alarm- oder Stoppsignal erzeugt werden.

In einer weiteren Ausgestaltung der Erfindung ist an den Ausgang der Sensorelemente jeweils eine Spannungsüberwachungseinheit angeschlossen, die feststellt, ob die Ausgangssignale $X, Y$ außerhalb eines vorgegebenen Spannungsbandes liegen. Der Ausgang des Sensorelements wird auf das Potential Null gesetzt, wenn ein Ausgangssignal außerhalb des Spannungsbandes liegt.

Die Erfindung wird anhand einer Zeichnung nachfolgend kurz weiter erläutert.

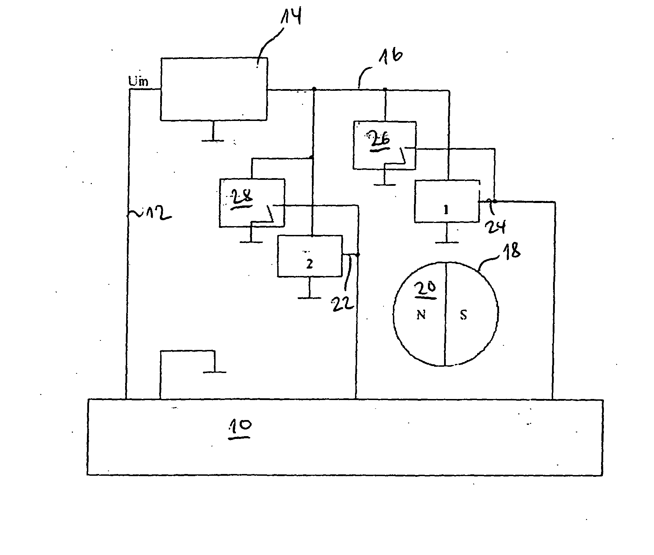

Die einzige Figur zeigt ein Blockschaltbild eines Drehwinkelsensors nach der Erfindung.

Ein erstes Sensorelement 1 und ein zweites Sensorelement 2 werden von einer Anschlußleiste 10 über eine Leitung 12, einen Regler 14 und eine Leitung 16 mit Spannung versorgt. Es handelt sich z. B. um Hallelemente, deren Achsen orthogonal zueinander liegen, wobei durch den Schnittpunkt der Achsen die Drehachse einer Welle 18 erstreckt ist, an der ein Permanentmagnet 20 angeordnet ist (zu erkennen an den Polen N und S). Bei Drehung des Permanentmagneten 20 um die Drehachse werden an den Ausgängen 22 bzw. 24 der Sensorelemente 1, 2 sinusförmige Spannungen erzeugt. Aus den Spannungswerten $Y, X$ wird durch z. B. nach der Formel arc tan 2($Y — B, X — B$) der jeweilige Drehwinkel wird bestimmt. Die Auswertung erfolgt in einem Prozessor, der nicht weiter dargestellt ist. Außerdem werden die Ausgangssignale der Sensorelemente 1, 2 weiter mathematisch ausgewertet, um die Korrektheit der Drehwinkelmessung zu überprüfen. Dies ist eingangs bereits erläutert.

Mit den zu den Sensorelementen 1, 2 führenden Spannungsversorgungsleitungen sind Spannungsüberwachungseinheiten 26, 28 verbunden. Sie legen den Ausgang 22 bzw. 24 der Sensorelemente 1, 2 auf das Potential Null, wenn festgestellt wird, daß eine Ausgangsspannung nicht innerhalb eines vorgegebenen Bandes liegt. Dadurch kann festgestellt werden, ob z. B. ein Drahtbruch oder ein sonstiger Fehler vorliegt. Außerdem führt eine Abwendung der Versorgungsspannung außerhalb eines Dreiecks von 4,6 bis 5,4 Volt zu einer unzulässigen Wanderung des Ausgangssignals der Sensorelemente 1, 2.

## Patentansprüche

1. Drehwinkelsensor für eine elektrische Lenkung eines Flurförderzeugs, bei dem zwei magnetfeldempfindliche Sensorelemente auf orthogonalen Achsen angeordnet sind und ein Permanentmagnet an einer durch den Achsenschnittpunkt sich erstreckenden Welle angebracht ist und die Ausgangssignale $X, Y$ der Sensorelemente auf eine Auswerteeinheit gegeben werden, welche den Drehwinkelwert mittels einer in der Auswerteeinheit abgelegten Funktion aus den beiden Ausgangssignalen $X, Y$ bestimmt, in welchem in der Auswerteeinheit (10) für eine Vielzahl von vorgegebenen Werten eines der Ausgangssignale X oder Y aus der geometrischen Beziehung der Sensoren (1, 2) errechnete zugehörige ideale Werte des anderen Ausgangssignals $Y, X$ abgelegt sind, die gemessenen Werte des anderen Ausgangssignals $Y, X$ mit den idealen Werten verglichen werden, und eine Warn- oder Stopsignal erzeugt wird, wenn der Unterschied zwischen gemessenem und idealem Wert einen vorgegebenen Betrag erreicht und daß an den Ausgang der Sensorelemente (1, 2) jeweils eine Spannungsüberwachungseinheit (26, 28) angeschlossen ist, die feststellt, ob die Ausgangssignale $X, Y$ der Sensorelemente (1, 2) innerhalb eines vorgegebenen Spannungsbandes liegen und die den Ausgang eines Sensorelements (1, 2) auf das Potential Null setzt, wenn das zugehörige Ausgangssignal des Sensorelements außerhalb eines vorgegebenen Spannungsbandes liegt.

2. Drehwinkelsensor nach Anspruch 1, **dadurch gekennzeichnet, daß** in der Auswerteeinheit aus den Sensorsignalen $X, Y$ nach der Formel:

$$\Theta_{\text{redundant, 1}} = \arcsin\left(\frac{Y-B}{A}\right)$$

$$\Theta_{\text{redundant, 2}} = \arccos\left(\frac{X-B}{A}\right)$$

redundante Drehwinkelwerte $\Theta_{\text{red.1}}$ und $\Theta_{\text{red.2}}$ ermittelt werden, wobei $A$ die Amplitude und $B$ der Offset der Ausgangssignale ist und ein Warn- oder Stoppsignal erzeugt wird, wenn der Absolutwert der Differenz der redundanten Drehwinkelwerte $\Theta_{\text{red.1}}$ und $\Theta_{\text{red.2}}$ einen vorgegebenen Wert überschreitet.

3. Drehwinkelsensor für eine elektrische Lenkung eines Flurförderzeugs, bei dem zwei magnetfeldempfindliche Sensorelemente auf orthogonalen Achsen angeordnet sind und ein Permanent-magnet an einer durch die den Achsenschnittpunkt sich erstreckenden Welle angebracht ist und die Ausgangssignale $X, Y$ der Sensorelemente auf eine Auswerteeinheit gegeben wird, welche den Drehwinkelwert mittels einer in der Auswerteeinheit abgelegten Funktion aus den beiden Ausgangssignalen $X, Y$ bestimmt, in welchem in der Auswerteeinheit das Resultat $\varepsilon$ der Formel

$$\left| (X-B)^2 + (Y-B)^2 - A^2 \right|$$

gebildet wird, wobei $X$ und $Y$ die Ausgangssignale, $A$ die Amplitude und $B$ der Offset der Ausgangssignale $X, Y$ sind, das Resultat $\varepsilon$ mit einem vorgegebenen Wert verglichen wird und ein Warn- oder Stoppsignal erzeugt wird, wenn der vorgegebene Wert überschritten wird und daß an den Ausgang der Sensorelemente (1, 2) jeweils eine Spannungsüberwachungseinheit (26, 28) angeschlossen ist, die feststellt, ob die Ausgangssignale $X, Y$ der Sensorelemente (1, 2) innerhalb eines vorgegebenen Spannungsbandes liegen und die den Ausgang eines Sensorelements (1, 2) auf das Potential Null setzt, wenn das zugehörige Ausgangssignal des Sensorelements außerhalb eines vorgegebenen Spannungsbandes liegt.

4. Drehwinkelsensor nach Anspruch 2 oder 3, **dadurch gekennzeichnet, daß** die Berechnung der redundanten Drehwinkelwerte bzw. des Resultats $\varepsilon$ mit einer vorgegebenen Abtastrate T erfolgt und ein Alarm- oder Stoppsignal erzeugt wird, wenn die zwischen zwei Abtastwerten gemessenen Drehwinkelwerte bzw. das Resultat $\varepsilon$ von einem vorgegebenen Änderungswert $\Delta \Phi$ bzw. $\Delta \varepsilon$ abweichen.

5. Drehwinkelsensor nach einem der Ansprüche 1 bis 4, **dadurch gekennzeichnet, daß** das Stoppsignal für den Antriebsmotor des Flurförderzeugs erzeugt wird.

**Claims**

1. Rotation angle sensor for an electrical steering system of an industrial truck, in which two magnetic field sensitive sensor elements are arranged on orthogonal axes and a permanent magnet is attached to a shaft extending through the axis intersection point and the output signals $X, Y$ of the sensor elements are given to an evaluation unit, which determines from the two output signals $X, Y$ the rotation angle value by means of a function saved in the evaluation unit, in which for a plurality of predetermined values of one of the output signals X or Y associated ideal values calculated from the geometrical relationship of the sensors (1, 2) of the other output signal $Y, X$ are saved in the evaluation unit (10), the measured values of the other output signal $Y, X$ are compared with the ideal values and a warning or stop signal is created if the difference between the measured and ideal value reaches a predetermined amount and a voltage monitoring unit (26, 28) is connected to the output of each of the sensor elements (1, 2), which determines whether the output signals X, Y of the sensor elements (1, 2) lie within a predetermined voltage band and which sets the output of a sensor element (1, 2) to the zero potential if the respective output signal of the sensor element lies outside the predetermined voltage band.

2. Rotation angle sensor in accordance with claim 1, **characterized in that**, according to the formula:

$$\Theta_{\text{redundant, 1}} = \arcsin\left(\frac{Y-B}{A}\right)$$

$$\Theta_{\text{redundant, 2}} = \arccos\left(\frac{X-B}{A}\right)$$

redundant rotation angle values $\Theta_{\text{red. 1}}$ and $\Theta_{\text{red. 2}}$ are identified from the sensor signals $X, Y$ in the evaluation unit, wherein $A$ is the amplitude and $B$ is the offset of the output signals and a warning or stop signal is created if the absolute value of the difference of the redundant rotation angle values $\Theta_{\text{red. 1}}$ and $\Theta_{\text{red. 2}}$ exceeds a predetermined value.

3. Rotation angle sensor for an electrical steering system of an industrial truck in which two magnetic field sensitive sensor elements are arranged on orthogonal axes and a permanent magnet is attached to a shaft extending through the axis intersection point and the output signals $X, Y$ of the sensor elements are given to an evaluation unit, which determines from the two output signals $X, Y$ the rotation angle value by means of a function saved in the evaluation unit, in which the result is formed in the evaluation unit according to the formula:

$$\left| (X-B)^2 + (Y-B)^2 - A^2 \right|,$$

wherein X and Y are the output signals, A is the amplitude and B is the offset of the output signals X, Y, the result $\varepsilon$ is compared with a predetermined value and a warning or stop signal is created if the predetermined value is exceeded and that a voltage monitoring unit (26, 28) is connected to the output of each of the sensor elements (1, 2), which determines whether the output signals X, Y of the sensor elements (1, 2) lie within a predetermined voltage band and which sets the output of a sensor element (1, 2) to the zero potential if the respective output signal of the sensor element lies outside the predetermined voltage band.

**4.** Rotation angle sensor in accordance with claim 2 or 3, **characterized in that** the calculation of the redundant rotation angle values or the result ε occurs with a predetermined sample rate T and an alarm or stop signal is created if the rotation angle values measured between two sample values or the result ε deviates from a predetermined change value ΔΦ or Δε.

**5.** Rotation angle sensor in accordance with one of claims 1 through 4, **characterized in that** the stop signal for the drive motor of the industrial truck is created.

**Revendications**

**1.** Capteur d'angle de rotation pour une direction assistée électrique d'un chariot de manutention, dans lequel deux éléments de capteur sensibles au champ magnétique sont disposés sur des axes orthogonaux et un aimant permanent est placé sur un arbre s'étendant à travers le point d'intersection des axes et les signaux de sortie X, Y des éléments de capteurs sont transmis à une unité d'évaluation qui détermine la valeur d'angle de rotation à l'aide d'une fonction enregistrée dans l'unité d'évaluation à partir des deux signaux de sortie X, Y, dans lequel sont enregistrées dans l'unité d'évaluation (10) pour une multiplicité de valeurs données d'un des signaux de sortie X ou Y des valeurs idéales correspondantes de l'autre signal de sortie Y, X calculées à partir de la relation géométrique des capteurs (1, 2), les valeurs mesurées de l'autre signal de sortie Y, X sont comparées avec les valeurs idéales, et un signal d'alerte ou d'arrêt est généré lorsque la différence entre valeur mesurée et idéale atteint une grandeur donnée et qu'à la sortie des éléments de capteur (1, 2) est respectivement connectée une unité de contrôle de tension (26, 28) qui détermine si les signaux de sortie X, Y des éléments de capteurs (1, 2) se trouvent compris dans une plage de tension donnée et qui met la sortie d'un élément de capteur (1, 2) au potentiel zéro lorsque le signal de sortie correspondant de l'élément de capteur se trouve en dehors d'une plage de tension donnée.

**2.** Capteur d'angle de rotation selon la revendication 1, **caractérisé en ce que** dans l'unité d'évaluation selon la formule :

$$\Theta_{redondant,1} = \arcsin\left(\frac{Y-B}{A}\right)$$

$$\Theta_{redondant,2} = \arccos\left(\frac{X-B}{A}\right)$$

des valeurs $\Theta_{red.1}$ et $\Theta_{red.2}$ redondantes sont déterminées à partir des signaux de capteur X, Y, A étant l'amplitude et B étant le décalage des signaux de sortie et un signal d'alerte ou d'arrêt est généré lorsque la valeur absolue de la différence des valeurs d'angle de rotation $\Theta_{red.1}$ et $\Theta_{red.2}$ redondantes dépasse une valeur donnée.

**3.** Capteur d'angle de rotation pour une direction assistée électrique d'un chariot de manutention, dans lequel deux éléments de capteur sensibles au champ magnétique sont disposés sur des axes orthogonaux et un aimant permanent est placé sur un arbre s'étendant à travers le point d'intersection des axes et les signaux de sortie X, Y des éléments de capteur sont transmis à une unité d'évaluation qui détermine la valeur d'angle de rotation à l'aide d'une fonction enregistrée dans l'unité d'évaluation à partir des signaux de sortie X, Y, dans lequel le résultat ε de la formule

$$|(X{-}B)^2+(Y{-}B)^2{-}A^2|$$

est formé dans l'unité d'évaluation, X et Y étant les signaux de sortie, A l'amplitude et B le décalage des signaux de sortie X, Y, le résultat ε étant comparé avec une valeur donnée et un signal d'alerte ou d'arrêt étant généré lorsque la valeur donnée est dépassée et qu'à la sortie des éléments de capteur (1, 2) est respectivement connectée une unité de contrôle de tension (26, 28) qui détermine si les signaux de sortie X, Y des éléments de capteur (1, 2) se trouvent compris dans une plage de tension donnée et qui met la sortie d'un élément de capteur (1, 2) au potentiel zéro lorsque le signal de sortie correspondant de l'élément de capteur se trouve en dehors d'une plage de tension donnée.

**4.** Capteur d'angle de rotation selon la revendication 2 ou 3, **caractérisé en ce que** le calcul des valeurs d'angle de rotation redondantes ou du résultat ε est effectué avec une fréquence d'échantillonnage T donnée et un signal d'alerte ou d'arrêt est généré lorsque les valeurs d'angle de rotation mesurées entre deux valeurs de fréquence d'échantillonnage ou le résultat ε diffèrent d'une valeur de modification ΔΦ ou Δε.

5. Capteur d'angle de rotation selon l'une des revendications 1 à 4, **caractérisé en ce que** le signal d'arrêt est généré pour le moteur de propulsion du chariot de manutention.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 01262415 A
- DE 10143286 A1
- US 5463393 A
- WO 2005050140 A